(19) Europäisches Patentamt / European Patent Office / Office européen des brevets

(11) **EP 2 822 175 A1**

(12) **EUROPEAN PATENT APPLICATION**
published in accordance with Art. 153(4) EPC

(43) Date of publication:
**07.01.2015 Bulletin 2015/02**

(51) Int Cl.:
**H02P 21/00** (2006.01)   **B60L 9/18** (2006.01)
**H02P 27/04** (2006.01)

(21) Application number: **13755244.4**

(22) Date of filing: **25.02.2013**

(86) International application number:
**PCT/JP2013/001047**

(87) International publication number:
**WO 2013/128871 (06.09.2013 Gazette 2013/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority:   **01.03.2012   JP 2012045731**

(71) Applicant: **Kabushiki Kaisha Toshiba
Minato-ku
Tokyo 105-8001 (JP)**

(72) Inventors:
• **TANIGUCHI, Shun
  (JP)**
• **YASUI, Kazuya
  (JP)**
• **YUUKI, Kazuaki
  (JP)**
• **NAKAZAWA, Yosuke
  (JP)**

(74) Representative: **Willquist, Sofia Ellinor
Awapatent AB
Junkersgatan 1
582 35 Linköping (SE)**

(54) **MOTOR CONTROL DEVICE AND CONTROL METHOD THEREFOR**

(57)    A rail vehicle (10) comprises: a permanent magnet synchronous motor (3); an inverter (1) for driving the permanent magnet synchronous motor (3); and a vehicle speed sensor (9) for detecting the vehicle speed VTcar. The initial rotational speed ωest0 is estimated based on the vehicle speed VTcar; the angular velocity (ωest) is estimated, taking the initial rotational speed (ωest0) as the initial value; the rotational phase angle (θest) is estimated based on the angular velocity (ωest); and the inverter (1) is controlled based on the rotational phase angle (θest).

FIG. 1

**Description**

**FIELD**

An embodiment of the present invention relates to a motor control device that controls a synchronous motor and to a control method therefor.

**BACKGROUND**

In a motor control device that employs synchronous motor rotation sensor-less control, methods are generally known of restarting an inverter from a coasting state. For example, the method is available of using a voltage sensor to estimate the rotational phase angle speed when restarting.

As such examples, there may be mentioned: Laid-open Japanese Patent Application 2006-217754 (hereinafter referred to as Patent Reference 1); Laid-open Japanese Patent Application 2008-017690 (hereinafter referred to as Patent Reference 2) ; Laid-open Japanese Patent Application H11-075394 (hereinafter referred to as Patent Reference 3); Laid-open Japanese Patent Application 2003-250293 (hereinafter referred to as Patent Reference 4) and Laid-open Japanese Patent Application 2001-339999 (hereinafter referred to as Patent Reference 5).

However, when a voltage sensor is provided, costs are increased. Also, if the rotational phase angle is estimated without using a voltage sensor, time is required for this estimation of the rotational phase angle. The response time before supplying the start-up instruction is thereby delayed.

Accordingly, an object of the present embodiment is to provide a control device having a motor control device and motor control method whereby costs are reduced but in which the response characteristics for start-up from a coasting condition are improved.

A motor control device according to the present embodiment comprises: a synchronous motor for driving a vehicle; power conversion means for converting power for driving said synchronous motor; rotational speed-related information acquisition means for acquiring rotational speed-related information related to the rotational speed of said synchronous motor, without providing said synchronous motor with a voltage sensor; initial rotational speed calculation means that calculates the initial rotational speed of said synchronous motor based on said rotational speed-related information acquired by said rotational speed-related information acquisition means; rotational speed calculation means that calculates the rotational speed of said synchronous motor, taking as the initial value said initial rotational speed calculated by said initial rotational speed calculation means; rotational phase angle calculation means that calculates the rotational phase angle of said synchronous motor, based on said rotational speed calculated by said rotational speed calculation means; and control means that controls said power conversion means based on said rotational phase angle calculated by said rotational phase angle calculation means.

**BRIEF DESCRIPTION OF THE DRAWINGS**

FIG. 1 is a layout diagram showing the layout of a control device applied to a rail vehicle according to a first embodiment of the present invention;

FIG. 2 is a layout diagram showing the layout of a control device applied to a hybrid automobile according to a second embodiment of the present invention;

FIG. 3 is a layout diagram showing the layout of a rail vehicle according to a third embodiment of the present invention;

FIG. 4 is a layout diagram showing the layout of a first control device applied to a rail vehicle according to a third embodiment;

FIG. 5 is a layout diagram of a second control device applied to a rail vehicle according to a third embodiment;

FIG. 6 is a layout diagram showing the layout of a rail vehicle according to a fourth embodiment of the present invention;

FIG. 7 is a layout diagram showing the layout of a first control device applied to a rail vehicle according to the fourth embodiment.

**DETAILED DESCRIPTION**

Embodiments of the present invention are described below with reference to the drawings.

(First embodiment)

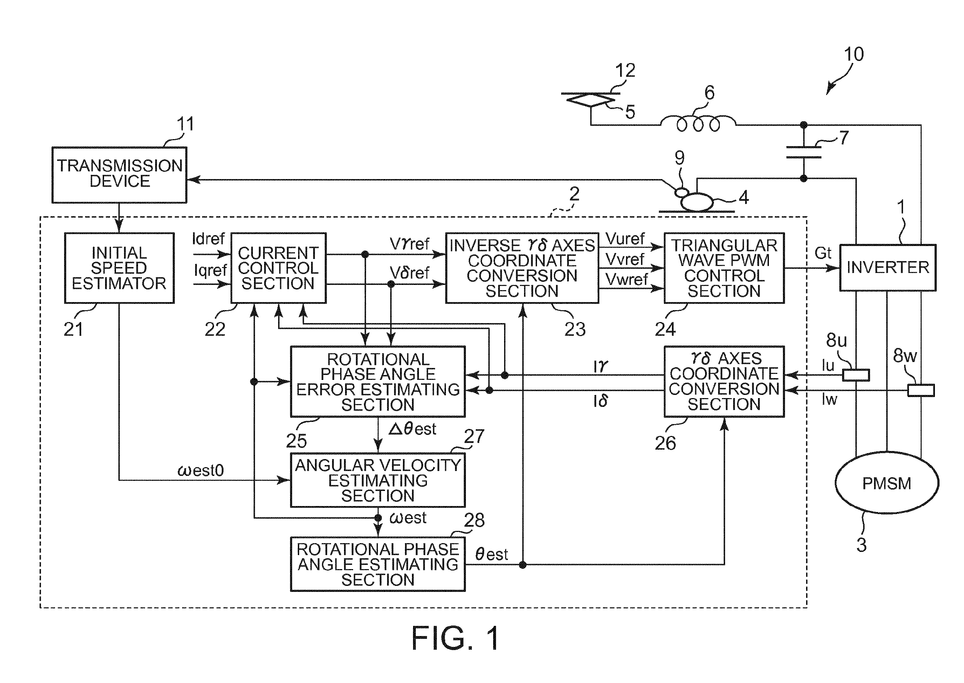

FIG. 1 is a layout diagram showing the layout of a control device 2 applied to a rail vehicle 10 according to a first embodiment. Identical parts in the drawings will be given the same reference numbers and detailed description thereof will be dispensed with: thus the description will focus on parts that are different. Repetition of description will also be dispensed with in the embodiments below.

A rail vehicle 10 comprises: an inverter (power conversion means) 1; a control device (control means) 2; a permanent magnet synchronous motor (PMSM) (permanent magnet synchronous motor) 3; vehicle wheels 4; a pantograph 5; a filter reactor 6; a filter capacitor 7; two current detectors 8u, 8w; a vehicle speed sensor (rotational speed-related information acquisition means) 9; and a transmission device 11.

The pantograph 5 is a power-collecting device that collects power from an overhead line 12.

The filter reactor 6 and the filter capacitor 7 are elements that constitute a filter circuit. The filter circuit suppresses harmonics that are superimposed by the inverter 1.

The positive electrode terminal on the DC side of the inverter 1 is connected with the pantograph 5 through the filter reactor 6. The negative electrode terminal on the DC side of the inverter 1 is earthed to the rails through the vehicle wheels. The filter capacitor 7 is connected in parallel with the DC side of the inverter 1. The permanent magnet synchronous motor 3 is connected with the AC side of the inverter 1.

The inverter 1 mutually converts AC power and DC power by changing over ON and OFF of the switching elements of the main circuit incorporated therein, in accordance with gate instructions Gt that are output from the control device 2. Specifically, the inverter 1 converts the power collected by the pantograph 5 into power for driving the permanent magnet synchronous motor 3. Also, the inverter 1 converts regenerated power that is supplied from the permanent magnet synchronous motor 3 into power to be returned to the overhead line 12.

The permanent magnet synchronous motor 3 is a synchronous motor constituting the power source for driving the rail vehicle 10. The permanent magnet synchronous motor 3 generates magnetic field by means of the three-phase AC current flowing in the exciting magnetic phase and generates torque by the magnetic interaction thereof with the rotor. It should be noted that, in the place of the permanent magnet synchronous motor 3, any synchronous motor could be employed, even a synchronous motor not using a permanent magnet.

The two current detectors 8u, 8w respectively detect the two phase current values Iu, Iw of the U phase and W phase, of the three-phase AC current flowing in the permanent magnet synchronous motor 3. It should be noted that there may be no need to provide a current detector for detecting the V phase. The current detectors 8u, 8w output the detected current values Iu, Iw to the control device 2.

The vehicle speed sensor 9 is installed at the vehicle wheels 4. The vehicle speed sensor 9 detects the vehicle speed VTcar. The vehicle speed sensor 9 outputs the detected vehicle speed VTcar to the transmission device 11. For example, the vehicle speed sensor may be a sensor that is employed for operation or control of a train, such as a speedometer or ATO (automatic train operation), installed in the cab.

The transmission device 11 transmits the vehicle speed VTcar detected by the vehicle speed sensor 9 to the control device 2. For example, the transmission device 11 is a device that transmits various types of information to each vehicle.

The control device 2 comprises: an initial speed estimator (initial rotational speed calculation means) 21; a current control section 22; an inverse $\gamma\delta$ axes coordinate conversion section 23; a triangular wave PWM control section 24; a rotational phase angle error estimating section 25; a $\gamma\delta$ axes coordinate conversion section 26; an angular velocity estimating section (rotational speed calculation means) 27; and a rotational phase angle estimating section (rotational phase angle calculation means) 28.

The $\gamma\delta$ axes coordinate conversion section 26 inputs the current values Iu, Iw of two phases i.e. the U phase and W phase, of the three phases, that are respectively detected by the current detectors 8u, 8w; and inputs the rotational phase angle $\theta$est estimated by the rotational phase angle estimating section 28. It may be noted that it would also be possible to detect the current values of all three phases and output these to the $\gamma\delta$ axes coordinate conversion section 26. The $\gamma\delta$ axes coordinate conversion section 26 then converts the current values Iu, Iw of the three-phase fixed coordinates to the $\gamma\delta$ axes current values I$\gamma$, I$\delta$ of the $\gamma\delta$ axes rotational coordinates, using the rotational phase angle $\theta$est. The control device 2 employs the $\gamma\delta$ axes current values I$\gamma$, I$\delta$ as the current response values of the inverter 1. The $\gamma\delta$ axes coordinate conversion section 26 outputs the converted $\gamma\delta$ axes current values I$\gamma$, I$\delta$ to the rotational phase angle error estimating section 25 and current control section 22.

The dq axes coordinates are rotating coordinates comprising a d axis and q axis. The d axis is an axis in the direction of the magnetic flux of the rotor i.e. it is an axis in which no magnetic torque acts. The q axis is an axis orthogonal to the direction of the magnetic flux of the rotor (i.e. an axis orthogonal to the d axis), and is the axis in which the magnetic torque acts. Also, the $\gamma$ axis of the $\gamma\delta$ axes rotational coordinates is the estimated axis of the d axis and the $\delta$ axis is the estimated axis of the q axis, and is orthogonal to the $\gamma$ axis.

The current control section 22 inputs the dq axes current instruction values Idref, Iqref, the $\gamma\delta$ axes current

values Iγ, Iδ that have been converted by the γδ axes coordinate conversion section 26, and the angular velocity ωest that has been estimated by the angular velocity estimating section 27. The current control section 22 calculates γδ axes voltage instruction values Vγref and Vδref such that the γδ axes current values Iγ, Iδ track the dq axes current instruction values Idref and Iqref. The current control section 22 outputs the γδ axes voltage instruction values Vγref, Vδref to the inverse γδ axes coordinate conversion section 23 and the rotational phase angle error estimating section 25.

The inverse γδ axes coordinate conversion section 23 inputs the estimated rotational phase angle θest estimated by the rotational phase angle estimating section 28 and the γδ axes voltage instruction values Vγref, Vδref calculated by the current control section 22. The inverse γδ axes coordinate conversion section 23 converts the γδ axes voltage instruction values Vγref, Vδref to the three-phase voltage instruction values (modulation factor instruction values) Vvref, Vuref and Vwref, using the rotational phase angle θest. The inverse γδ axes coordinate conversion section 23 outputs the calculated three-phase voltage instruction values Vvref, Vuref and Vwref to the triangular wave PWM (pulse width modulation) control section 24.

The triangular wave PWM control section 24 generates a gate instruction Gt by triangular wave comparison-type PWM (pulse width modulation) control. The gate instruction Gt is a signal for turning the switching element of each phase of the inverter 1 ON or OFF. This is used to control drive of the permanent magnet synchronous motor 3. The triangular wave PWM control section 24 generates a gate instruction GT such that the output voltage of the inverter 1 follows the three-phase voltage instruction values Vvref, Vuref and Vwref calculated by the inverse γδ axes coordinate conversion section 23. The triangular wave PWM control section 24 outputs the gate instruction Gt that has thus been generated to the inverter 1.

The initial speed estimator 21 inputs through the transmission device 11 the vehicle speed VTcar detected by the vehicle speed sensor 9. The initial speed estimator 21 estimates the initial angular velocity (the initial rotational speed) ωest0 [rad/s] from the vehicle speed VTcar [km/h] during coasting, using the following expression. The initial speed estimator 21 outputs the initial angular velocity (the initial rotational speed) ωest0 to the angular velocity estimating section 27.

[math 1]

$$\omega est0 = \text{VTcar} \times \frac{1}{\text{WD}} \times \text{GR} \times \text{P} \times \left[\frac{10^2}{6}\right]^2 \times 2\pi$$

...Expression (1)

where WD is the vehicle wheel diameter [mm], GR is the gear ratio and P is the number of poles of the motor.

Typically, the speed used in control of a train has a precision of about ±1 to 2 [km/h]. In this case, the error of the estimated initial rotational speed ωest0 is within 5%.

The rotational phase angle error estimating section 25 inputs the calculated γδ axes voltage instruction values Vγref, Vδref calculated by the current control section 22, the γδ axes current values Iγ, I δ calculated by the γδ axes coordinate conversion section 26, and the angular velocity ωest of the rotor estimated by the angular velocity estimating section 27. The rotational phase angle error estimating section 25 estimates a rotational phase angle of the permanent magnet synchronous motor 3 and phase difference (deviation) Δθest of the γδ axes coordinate system based on the γδ axes voltage instruction values Vγref, Vδref, γδ axes current values Iγ, Iδ and angle speed ωest. The rotational phase angle error estimating section 25 outputs the estimated phase difference Δθest to the angular velocity estimating section 27.

It should be noted that the phase difference Δθest may correspond to the phase difference in the vicinity of zero, as for example sin Δθ. For example, if an axis offset by a predetermined angle from the estimated axis of the direction of the permanent magnet magnetic flux of the rotor is denoted by the γ axis, this may be the deviation between the γ axis voltage and the γ axis voltage estimated value and may be expressed by an evaluation function. Also, although, in this case, the phase was estimated by a rotational coordinate system, the estimation could be performed by a fixed coordinate system.

The angular speed estimating section 27 inputs the estimated phase difference Δθest estimated by the rotational phase angle error estimating section 25 and the initial angular velocity (the initial rotational speed) ωest0 estimated by the initial speed estimator 21. Taking the initial value as the initial angular velocity (the initial rotational speed) ωest0, the angular speed estimating section 27 calculates the angular velocity (the rotational speed) ωest of the rotor by performing PI (proportional integral) control, inputting the phase difference Δθest. By supplying the initial angular velocity (the initial rotational speed) ωest0 to the angular velocity estimating section 27 in this way as an initial value, rapid convergence of control by the angular velocity estimating section 27 in a stable fashion can be achieved. The angular velocity estimating section 27 outputs the estimated angular velocity (the rotational speed) ωest to the current control section 22, the rotational phase angle error estimating section 25 and the rotational phase angle estimating section 28.

The rotational phase angle estimating section 28 estimates the rotational phase angle θest by integrating the angular velocity ωest estimated by the angular velocity estimating section 27. The rotational phase angle estimating section 28 outputs this estimated rotational phase angle θest to the inverse γδ axes coordinate conversion section 23 and γδ axes coordinate conversion section 26.

With this embodiment, when the inverter 1 and the permanent magnet synchronous motor 3 are started up from a coasting condition, the angular velocity (the rotational speed) ωest can be found rapidly in a stable fashion by supplying the initial angular velocity (initial rotational speed) ωest0 based on the vehicle speed VTcar.

Usually, the angular speed would be estimated by taking the initial speed as zero, since, when the synchronous motor is restarted from a coasting condition, the speed is generally not known. In this case, the estimated angular speed converges with the time constant of the estimation control (for example PI control). However, when angular speed is employed to calculate for example phase error, in the case of angular speed prior to convergence, calculation of the phase error cannot be correctly performed. Consequently, convergence of control of the synchronous motor is slow and sometimes it is not even possible to achieve convergence. Also, even when angular speed is not employed in calculation of for example the phase difference, drive of the synchronous motor is unstable until angular speed convergence has been achieved, and, sometimes, start-up of the inverter and synchronous motor cannot be achieved, due to protective action in regard to over-current or over-voltage.

In contrast to this, rapid and stable convergence of the estimated angular velocity can be achieved if the control device 2 obtains initial rotational speed ωest0 by using the vehicle speed VTcar. As a result, the control device 2 can achieve start-up in a short time and with a high degree of stability, even in cases where the inverter 1 and the permanent synchronous motor 3 are being started up from a coasting condition.

Also the control device 2 can estimate the angular velocity ωest without needing to provide the permanent magnet synchronous motor 3 that is the subject of control with a voltage sensor. In this way, the equipment cost of the control system of the permanent magnet synchronous motor 3 can be reduced.

Thus, with the motor control device according to the embodiment described above, by estimating the initial rotational speed from the vehicle speed, a control device can be provided having a motor control device and motor control method whereby improved response on start-up from a coasting condition and reduced costs can be achieved.

(Second embodiment)

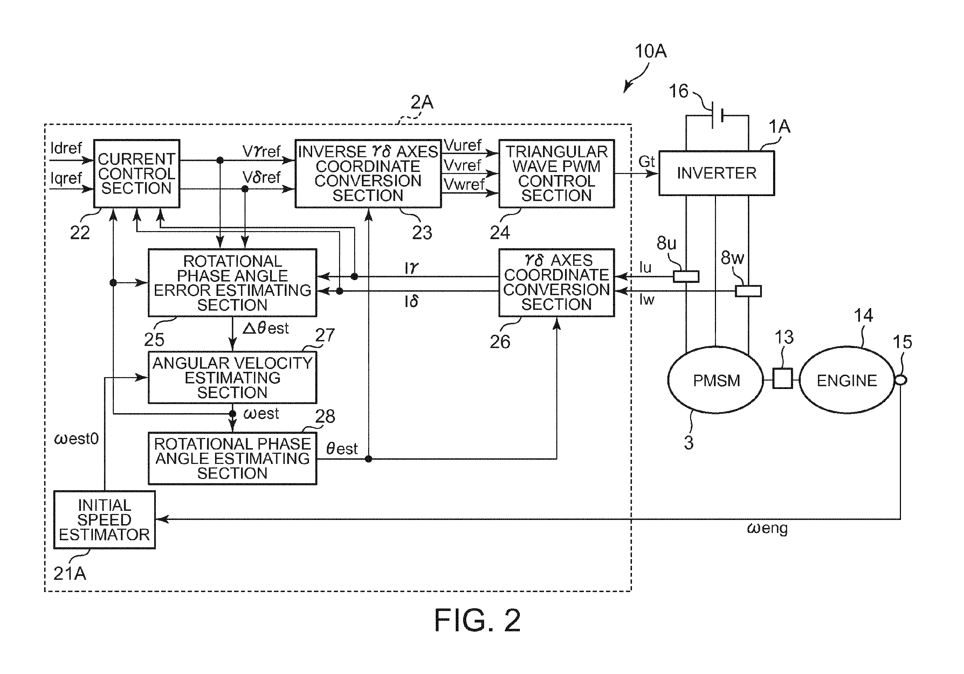

FIG. 2 is a layout diagram showing the layout of a control device 2A applied to a hybrid automobile (HEV) 10A according to a second embodiment of the present invention.

A hybrid automobile 10A comprises: an inverter 1A; a control device 2A; a permanent magnet synchronous motor 3; two current detectors 8u, 8w; gears 13; an engine 14; an engine rotational speed sensor (rotational speed detection means) 15; and a battery 16. The permanent magnet synchronous motor 3 and the two current detectors 8u, 8w are the same as in the first embodiment.

A battery (DC power source) 16 is connected on the DC side of the inverter 1A. The inverter 1A converts the DC power that is supplied from the battery 16 to AC power. Other aspects are the same as in the case of the inverter 1 according to the first embodiment.

The engine 14 is a power source for driving a hybrid automobile 10A together with the permanent magnet synchronous motor 3. The rotational shaft of the engine 14 is linked with the rotational shaft of the permanent magnet synchronous motor 3 through gears 13. It should be noted that the engine 14 may be linked with the permanent magnet synchronous motor 3 without providing gears 13.

The engine rotational speed sensor 15 detects the rotational speed ωeng of the engine 14. The engine rotational speed sensor 15 outputs the detected rotational speed ωeng of the engine to the control device 2A. The engine rotational speed sensor 15 may be combined with the tachometer that is installed for displaying the engine rotational speed to the driver, or with a sensor that is employed for engine control.

In the control device 2A, the initial speed estimator 21 in the control device 2 according to the first embodiment shown in FIG. 1 is replaced by an initial speed estimator 21A. Other aspects are the same as in the case of the first embodiment.

The initial speed estimator 21A inputs the engine rotational speed ωeng that is detected by the engine rotational speed sensor 15. The initial speed estimator 21A estimates the initial rotational speed ωest0 [rad/s] from the engine rotational speed ωeng [rpm] during coasting, using the following expression. The initial speed estimator 21A outputs the calculated initial rotational speed ωest0 to the angular velocity estimating section 27.

[math 2]

$$\omega est0 = \omega eng \times GR \times P \times \frac{2\pi}{60} \qquad \dots\text{Expression (2)}$$

where GR is the gear ratio and P is the number of poles of the motor.

With this embodiment, the control device 2A can achieve convergence of the estimated angular speed rapidly and in a stable fashion by obtaining the initial rotational speed $\omega$est, based on the engine rotational speed $\omega$en. Consequently, the control device 2A can achieve start-up with a high degree of stability and in a short time, even in the case where the inverter 1A and permanent magnet synchronous motor 3 are started up from a coasting condition. Consequently, with this embodiment, the same beneficial effects as in the case of the first embodiment can be obtained.

(Third embodiment)

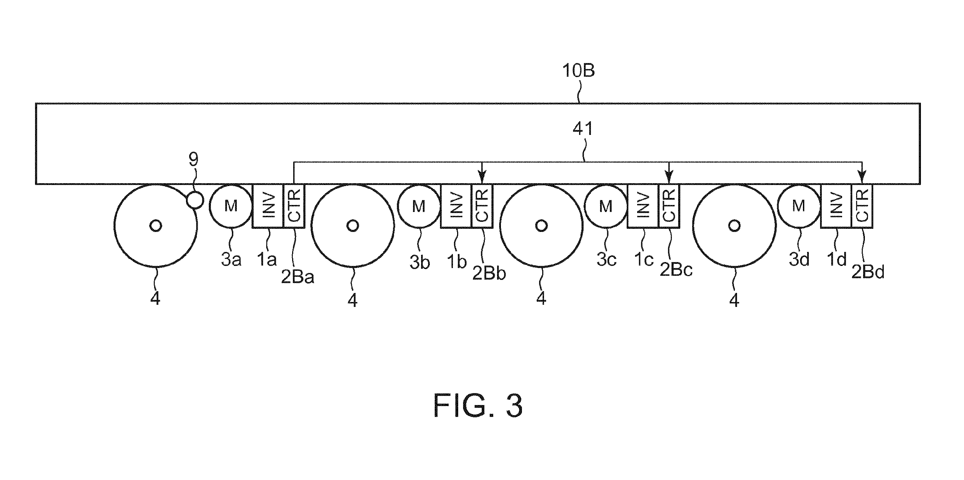

FIG. 3 is a layout diagram showing the layout of a rail vehicle 10B according to a third embodiment.

The rail vehicle 10B is a single vehicle composing a train. Also, the rail vehicle may be a train composed of a single vehicle.

The rail vehicle 10B comprises four permanent magnet synchronous motors: 3a (second synchronous motor), 3b (first synchronous motor), 3c (third synchronous motor) and 3d (fourth synchronous motor). Also, the rail vehicle 10B comprises inverters 1a, 1b, 1c, 1d and control devices 2Ba, 2Bb, 2Bc, 2Bd respectively corresponding to the permanent magnet synchronous motors 3a, 3b, 3c, 3d; and vehicle wheels 4 on the left and right sides. A vehicle speed sensor 9 is provided on the vehicle wheel 4 corresponding to the second permanent magnet synchronous motor 3a (second synchronous motor). The control devices 2Ba to 2Bd are connected by transmission paths 41 whereby data is exchanged.

The inverters 1a to 1d and the permanent magnet synchronous motors 3a to 3d are respectively the same as the inverter 1 and the permanent magnet synchronous motor 3 in the first embodiment. The four control devices 2Ba to 2Bd respectively control the inverters 1a to 1d and the permanent magnet synchronous motors 3a to 3d.

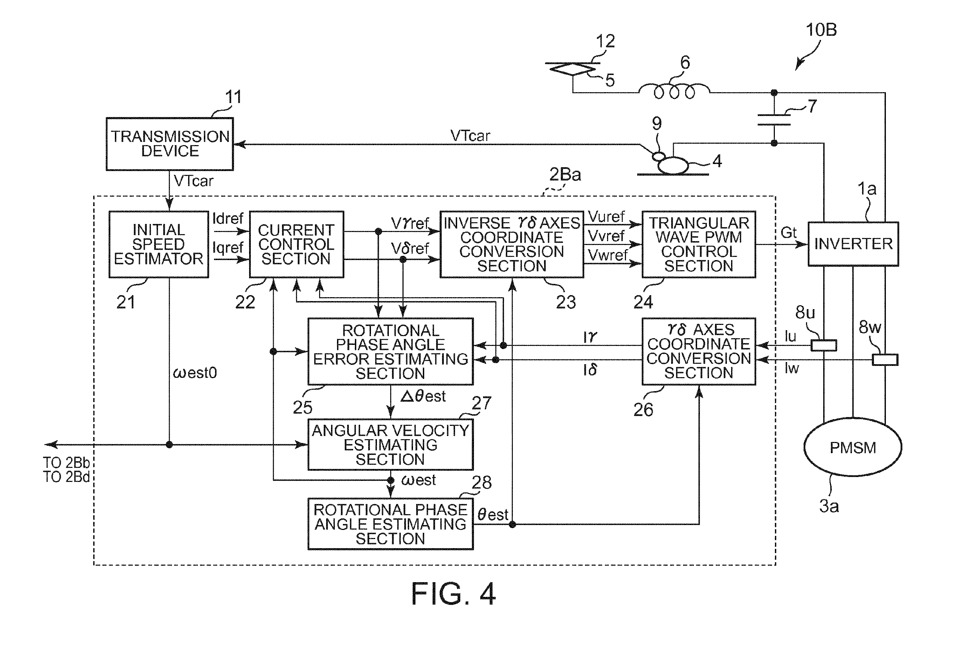

FIG. 4 is a layout diagram showing the layout of the first control device 2Ba applied to the rail vehicle 10B according to this embodiment.

The first control device 2Ba transmits the initial rotational speed $\omega$est0 estimated by the initial speed estimator 21 through the transmission path 41 to the other control devices 2Bb to 2Bd. Other aspects of the first control device 2Ba are the same as in the case of the control device 2 according to the first embodiment.

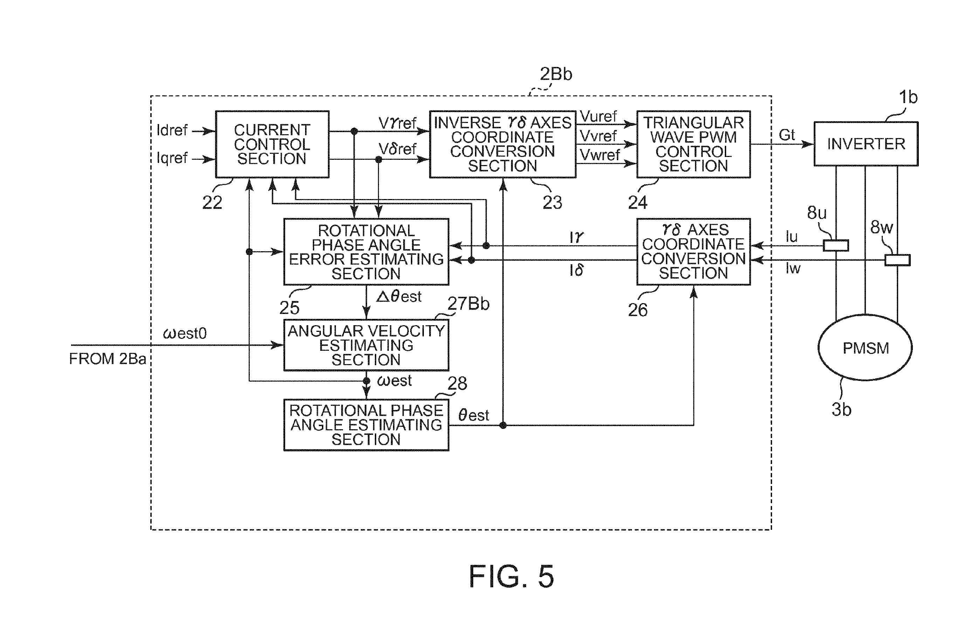

FIG. 5 is a layout diagram showing the layout of a second control device 2Bb applied to a rail vehicle 10B according to this embodiment. Since the third and fourth control devices 2Bc, 2Bd are identical with the second control device 2Bb, description thereof is dispensed with.

In the case of the second control device 2Bb, a layout is adopted in which the initial speed estimator 21 in the control device 2 according to the first embodiment shown in FIG. 1 is removed and an angular speed estimating section 27Bb is provided instead of the angular velocity estimating section 27. The angular velocity estimating section (initial rotational speed acquisition means) 27Bb estimates the angular velocity $\omega$est by receiving the initial rotational speed $\omega$est0 that is transmitted from the first control device 2Ba. Other aspects of the second control device 2Bb are identical with the second control device 2 according to the first embodiment.

With this embodiment, the following beneficial effects can be obtained.

With the first control device 2Ba, the same beneficial effects as in the case of the first embodiment can be obtained. Also, with the second control device 2Bb, the same beneficial effects as in the case of the first embodiment can be obtained even without providing an initial speed estimator 21, by receiving the initial rotational speed $\omega$est0 from the first control device 2Ba.

It should be noted that, while, up to this point, a layout has been described in which all of the first to fourth control devices 2Ba to 2Bd were provided on the same rail vehicle 10B, it would also be possible for these first to fourth control devices 2Ba to 2Bd to be provided in a distributed fashion on a plurality of rail vehicles 10B, so long as these rail vehicles 10B are part of the same train. This is because, so long as the permanent magnet synchronous motors 3 are provided in the same train, all these permanent magnet synchronous motors 3 may be assumed to be rotating with substantially the same rotational speed.

(Fourth embodiment)

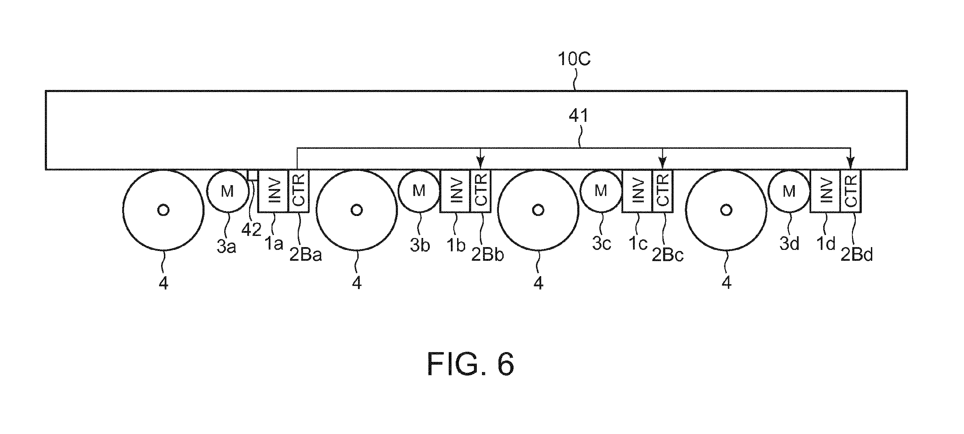

FIG. 6 is a layout diagram showing the layout of a rail vehicle 10C according to a fourth embodiment of the present invention.

In the case of the rail vehicle 10C, in a rail vehicle 10B according to the third embodiment shown in FIG. 3, a voltage sensor 42 is provided in place of the vehicle speed sensor 9 and a first control device 2Ca is provided in place of the first control device 2Ba. Other aspects are the same as in the case of the third embodiment.

A voltage sensor 42 detects the voltage Vuv between the U and V phases that are output from the first inverter 1a. The voltage sensor 42 outputs this voltage Vuv that is detected between the U and V phases to the first control device 2Ca.

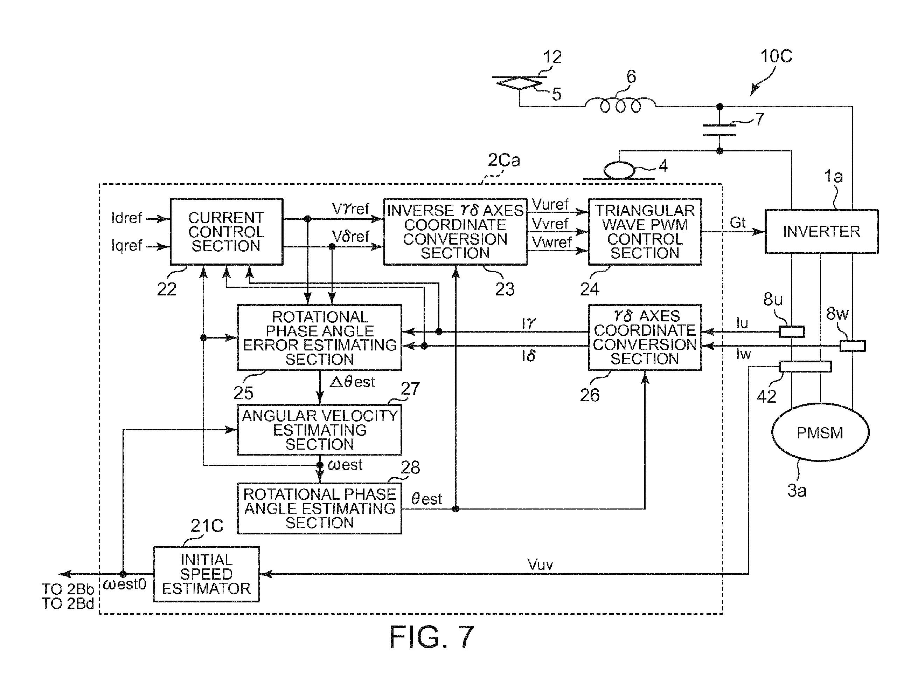

FIG. 7 is a layout diagram showing the layout of the first control device 2Ca applied to a rail vehicle according to this embodiment.

In the case of the first control device 2 Ca, in the first control device 2Ba according to the third embodiment shown in FIG. 4, the initial speed estimator 21 is replaced by an initial speed estimator 21C. Other aspects of the first control device 2Ca are the same as in the case of the control device 2Ba according to the third embodiment.

The initial speed estimator 21C estimates the initial rotational speed $\omega$est0, based on the voltage Vuv between the U and V phases detected by the voltage sensor 42. Other aspects of the initial speed estimator 21C are the same as in the case of the initial speed estimator 21 according to the third embodiment.

The angular velocity estimating section 27Bb shown in FIG. 5, which is provided in the second to fourth control devices 2Bb to 2Bd, receives the initial rotational speed $\omega$est0 that is output from the first control device 2Ca. Other aspects of the second to fourth control devices 2Bb to 2Bd are the same as in the case of the third embodiment.

With this embodiment, the same beneficial effect as in the case of the third embodiment can be obtained by the second to fourth control devices 2Bb to 2Bd receiving the initial rotational speed $\omega$est0 from the first control device 2Ca.

Specifically, even if an initial rotational speed $\omega$est0 of the permanent magnet synchronous motor 3a is employed that is different from the permanent magnet synchronous motors 3b to 3d that are controlled by the second to fourth control devices 2Bb to 2Bd, so long as these are permanent magnet synchronous motors 3b to 3d driving the same rail vehicle 10C, it may be inferred that the rotational speed will be substantially the same. Consequently, by having the second to fourth control devices 2Bb to 2Bd estimate the rotational phase angle $\theta$est under the assumption that the initial rotational speed $\omega$est0 of the permanent magnet synchronous motors 3b to 3d that are being controlled is the same as the initial rotational speed $\omega$est0 of the permanent magnet synchronous motor 3a that is not being controlled, start-up from the coasting condition of the permanent magnet synchronous motors 3b to 3d can be achieved in a stable fashion in a short time. Also, since there is no need to provide a voltage sensor 42 for three of the four permanent magnet synchronous motors, namely, the permanent magnet synchronous motors 3b to 3d, costs can be reduced.

It should be noted that, although, in the first to the third embodiments, in order to estimate the initial rotational speed $\omega$est0, the vehicle speed VTcar or the engine rotational speed $\omega$eng was detected, there is no restriction to these items of information. The information relating to the rotational speed of the permanent magnet synchronous motor 3 could be any item of information that can be acquired without using a voltage sensor. Also, although, in the fourth embodiment, the first control device 2Ca estimated the initial rotational speed $\omega$est0 based on the line voltage Vuv, there is no restriction to this. Any item of information could be employed that is related to the rotational speed of the permanent magnet synchronous motor 3. Also, it could be arranged for the first control device 2Ca to directly detect the rotational speed of the permanent magnet synchronous motor 3.

Also, although, in the embodiments, use of a single vehicle, either a rail vehicle or hybrid automobile, was described, the control of these embodiments could be applied to both types of vehicle.

While various embodiments of the present invention have been described, these embodiments are presented merely by way of example and are not intended to restrict the scope of the invention. Apart from these, novel embodiments could be implemented in various other modes; various deletions, substitutions or modifications can be made without departing from the gist of the invention. Such embodiments or modifications thereof are included in the scope or gist of the invention and are included in the inventions set out in the patent claims and equivalents thereof.

**FIELD OF INDUSTRIAL APPLICATION**

The present invention can be employed in a rail vehicle or hybrid automobile or the like employing a motor control device and control method thereof.

**Claims**

1. A motor control device comprising:

   a synchronous motor for driving a vehicle;
   a power conversion means for converting power for driving said synchronous motor;
   a rotational speed-related information acquisition means for acquiring rotational speed-related information related to the rotational speed of said synchronous motor, without providing said synchronous motor with a voltage sensor;

an initial rotational speed calculation means for calculating an initial rotational speed of said synchronous motor based on said rotational speed-related information acquired by said rotational speed-related information acquisition means;

a rotational speed calculation means for calculating a rotational speed of said synchronous motor, taking as the initial value said initial rotational speed calculated by said initial rotational speed calculation means;

a rotational phase angle calculation means for calculating a rotational phase angle of said synchronous motor, based on said rotational speed calculated by said rotational speed calculation means; and

a control means for controlling said power conversion means based on said rotational phase angle calculated by said rotational phase angle calculation means.

2. The motor control device according to claim 1, wherein said rotational speed-related information is a speed of said vehicle.

3. The motor control device according to claim 1, further comprising:

an engine for driving said vehicle, linked with said synchronous motor; and
a rotational speed detection means for detecting a rotational speed of said engine,
wherein said rotational speed-related information is a rotational speed of said engine detected by said rotational speed detection means.

4. A motor control device comprising:

a first synchronous motor for driving a train;
a power conversion means for converting power for driving said first synchronous motor;
an initial rotational speed acquisition means for acquiring an initial rotational speed of a second synchronous motor for driving said train;
a rotational speed calculation means for calculating a rotational speed of said first synchronous motor as an initial value of said initial rotational speed acquired by said initial rotational speed acquisition means;
a rotational phase angle calculation means for calculating a rotational phase angle of said first synchronous motor, based on said rotational speed calculated by said rotational speed calculation means; and
a control means for controlling said power conversion means, based on said rotational phase angle calculated by said rotational phase angle calculation means.

5. The motor control device according to claim 4, wherein said initial rotational speed is calculated based on a speed of said train.

6. The motor control device according to claim 4, wherein said initial rotational speed is calculated based on a line voltage applied to said second synchronous motor.

7. A motor control method of controlling a power conversion device that performs power conversion for driving a synchronous motor for driving a vehicle, said motor control method comprising:

acquiring rotational speed-related information related to a rotational speed of said synchronous motor without providing a voltage sensor for said synchronous motor;
calculating an initial rotational speed of said synchronous motor, based on said rotational speed-related information that has thus been acquired;
calculating a rotational speed of said synchronous motor using said calculated initial rotational speed as an initial value;
calculating a rotational phase angle, based on said calculated rotational speed; and
controlling said power conversion device, based on said rotational phase angle that has thus been calculated.

8. A motor control method of controlling power conversion device that performs power conversion for driving a first synchronous motor, said first synchronous motor and a second synchronous motor being provided in a train for driving a train, comprising:

acquiring an initial rotational speed of said second synchronous motor;
calculating a rotational speed of said first synchronous motor using said initial rotational speed that has thus been acquired as an initial value;

calculating a rotational phase angle of said first synchronous motor, based on said rotational speed that has thus been calculated; and

controlling said power conversion device based on said rotational phase angle that has thus been calculated.

FIG. 1

FIG. 2

FIG. 3

FIG. 4

FIG. 5

FIG. 6

EP 2 822 175 A1

FIG. 7

### INTERNATIONAL SEARCH REPORT

International application No.

PCT/JP2013/001047

A. CLASSIFICATION OF SUBJECT MATTER
*H02P21/00*(2006.01)i, *B60L9/18*(2006.01)i, *H02P27/04*(2006.01)i

According to International Patent Classification (IPC) or to both national classification and IPC

B. FIELDS SEARCHED

Minimum documentation searched (classification system followed by classification symbols)
H02P21/00, B60L9/18, H02P27/04

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2003-324998 A (Mitsubishi Electric Corp.), 14 November 2003 (14.11.2003), entire text; all drawings (Family: none) | 1-8 |
| Y | JP 2000-312403 A (Hitachi, Ltd.), 07 November 2000 (07.11.2000), paragraphs [0010] to [0014], [0020]; fig. 1, 3 & AU 2772400 A & AU 749036 B & CN 1271658 A & RU 2179515 C | 1-8 |
| Y | JP 2001-339999 A (Toshiba Corp.), 07 December 2001 (07.12.2001), paragraphs [0001] to [0010] (Family: none) | 1-8 |

| ☒ | Further documents are listed in the continuation of Box C. | ☐ | See patent family annex. |
|---|---|---|---|

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 09 May, 2013 (09.05.13) | 21 May, 2013 (21.05.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/001047

C (Continuation). DOCUMENTS CONSIDERED TO BE RELEVANT

| Category* | Citation of document, with indication, where appropriate, of the relevant passages | Relevant to claim No. |
|---|---|---|
| Y | JP 09-219906 A (Toyota Motor Corp.), 19 August 1997 (19.08.1997), paragraph [0012]; fig. 6 (Family: none) | 3 |
| Y | JP 2000-253506 A (Railway Technical Research Institute), 14 September 2000 (14.09.2000), paragraphs [0271] to [0283]; fig. 21 (Family: none) | 4-6,8 |
| Y | JP 2006-217754 A (Toshiba Corp.), 17 August 2006 (17.08.2006), paragraphs [0021] to [0024]; fig. 1 (Family: none) | 6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006217754 A
- JP 2008017690 A
- JP H11075394 B
- JP 2003250293 A
- JP 2001339999 A